# FASCICULE DE BREVET EUROPEEN

(11) **EP 2 330 922 B1**
(45) Date de publication et mention de la délivrance du brevet: **13.04.2016**
(21) Numéro de dépôt: 09781626.8
(22) Date de dépôt: 07.08.2009
(51) Int. Cl.: A23K 50/10, A23K 20/158, A23K 20/163, A23C 9/14, A23C 9/20

(54) **ALIMENT POUR ANIMAUX PRODUCTEURS DE LAIT, SON PROCEDE DE FABRICATION, SON UTILISATION AINSI QUE LE LAIT PRODUIT**
FUTTER FÜR MILCHPRODUZIERENDE TIERE, VERFAHREN ZU SEINER HERSTELLUNG UND SEINE VERWENDUNG
FEED FOR MILK-PRODUCING ANIMALS, METHOD FOR THE PRODUCTION THEREOF, USE THEREOF AND MILK PRODUCED

(30) Priorité: 08.08.2008 BE 200800439
(43) Date de publication de la demande: 15.06.2011
(73) Titulaire: Dumoulin, 5300 Seille (BE); Dumoulin NV, 8500 Kortrijk (BE)
(72) Inventeur: VANVOLSEM, Thibaut, B-5380 Pontillas (BE)
(74) Mandataire: Coulon, Ludivine
(86) Numéro de dépôt international: PCT/EP2009/060292
(87) Numéro de publication internationale: WO 2010/015708

(56) Documents cités:
- EP-A- 0 628 257
- EP-A- 1 106 078
- WO-A-93/25616
- FR-A- 2 768 025
- US-A- 5 789 001
- US-A1- 2004 058 003
- RONDIA P ET AL: "Fatty acid composition of milk fat from ewes supplemented with whole, crushed or extruded linseeds" RENCONTRES AUTOUR DES RECHERCHES SUR LES RUMINANTS, vol. 12, 2005, page 407, XP009115114 ISSN: 1279-6530

## Description

La présente invention se rapporte à un aliment pour animaux producteurs de lait comprenant des graines de lin extrudées et une quantité de matière grasse totale comprise entre 23 et 30 % en poids par rapport au poids de l'aliment.

Le lait de vache représente une composante importante de l'alimentation humaine en tant que tel et il est également à la base de nombreux produits alimentaires comme par exemple : des fromages, des yaourts, des desserts lactés, des crèmes glacées.

Pour un apport quotidien moyen de 100 g de lipides, un tiers provient de la consommation de lait ou de produits laitiers. Plus de 70% des matières grasses contenues dans le lait sont des acides gras saturés alors que les acides gras insaturés (monoinsaturés et polyinsaturés) représentent moins de 30% des matières grasses totales du lait de vache.

En effet, les matières grasses d'origine animale et, entre autres, celles des ruminants, sont souvent riches en acides gras saturés et les acides gras insaturés représentent moins de 30% des matières grasses du lait. Toutefois, le lait est un aliment important dans l'alimentation humaine par son contenu en protéines, en sels minéraux, en vitamines et en calcium. De plus, les acides gras du lait, qu'ils soient saturés (C4:0, C6:0, C8:0, C10:0; C12:0; C14:0; C16:0; C18:0) ou insaturés (C18:1; C18:2; C18:3) sont nécessaires dans l'alimentation humaine, mais leurs proportions devraient être changées de façon à diminuer l'impact négatif, en particulier l'effet hypercholestérolémiant sur la santé humaine induit par la proportion trop importante d'acides gras saturés dans le régime alimentaire.

De cette façon, les risques de maladies cardio-vasculaires qui représentent la première cause de mortalité dans les pays développés pourraient être diminués de manière significative.

Il faut souligner, parmi les acides gras polyinsaturés, l'importance des classes Oméga 3 et Oméga 6. Ces deux classes comprennent, entre autres, l'acide linoléïque (C18:2 Oméga 6) et l'acide alpha-linolénique (C18:3 Oméga 3), qui ne sont pas synthétisés par l'homme et devront être apportés par l'alimentation, ils sont pour cette raison appelés acides gras essentiels.

Il a été constaté que les Oméga 3 sont souvent déficitaires par rapport aux acides gras saturés dans l'alimentation humaine des pays développés, ce qui représente un problème important, puisque des études ont montré que les Oméga 3 avaient un effet préventif contre les problèmes cardio-vasculaires.

De plus, des études ont montré le rôle préventif de certains acides gras conjugués (CLA) contre la prolifération de cellules cancéreuses, or ces CLA peuvent être présents en plus grande quantité dans le lait que dans les huiles d'origine végétale. Ce CLA (C18:2 cis-9 trans-11) est reconnu pour ses vertus antitumorales et spécialement contre le cancer du sein. Le CLA (C18:2 cis-9 trans-11) influence fortement la morphogénèse du sein mais ses effets ne sont pas limitatifs quant à ses vertus antitumorales.

Des tentatives pour obtenir du lait plus riche en acides gras insaturés et moins riche en acides gras saturés ont été faites en utilisant des graines de colza, des graines de coton, ou du soja pour fabriquer des aliments vaches laitières. Les vaches laitières produisant du lait avec un spectre d'acides gras dans lequel il y avait plus d'acides gras insaturés et moins d'acides gras saturés que dans un lait produit par des vaches ne recevant pas les aliments précités. Cependant la teneur en Oméga 3, en Oméga 6 et en acides gras conjugués n'est pas prise en compte dans ces travaux, bien qu'ils constituent des éléments très importants en terme de valeur nutritionnelle.

On connaît également le brevet EP 1 106 077 qui traite d'un aliment pour vaches laitières permettant d'obtenir un lait qui, par sa nouvelle teneur en acides gras saturés et insaturés et, en particulier par sa teneur élevée en acides gras conjugués (C18:2 *cis*-9 *trans*-11) et en acides gras polyinsaturés de la classe des Oméga 3 tels que l'acide alpha-linolénique, a des effets bénéfiques sur la santé humaine, en particulier, un effet préventif des maladies cardio-vasculaires et de la cancérogenèse. Cet aliment pour vaches laitières comporte également des graines de lins extrudées et une teneur en matière grasse comprise entre 23 et 30 %. Cette teneur a été montrée comme fournissant un lait optimal au niveau de sa teneur en acides gras.

Toutefois, il existe un besoin d'encore améliorer la teneur en acides gras insaturés, en particulier des oméga 3.

A cette fin, il a été pensé d'augmenter le by-pass ruminal des acides gras insaturés provenant des graines oléagineuses, en particulier des graines de lin qui contiennent majoritairement du C18:3 (acide alpha-linolénique).

Parmi les acides gras du lait, à titre d'exemple, l'acide alpha-linolénique (Oméga 3) est appelé acide gras essentiel car il n'est pas synthétisable par les mammifères, et donc par l'homme. L'acide linoléique et l'acide linolénique doivent donc impérativement être fournis par l'alimentation car ils sont les précurseurs d'autres acides gras polyinsaturés à longue chaîne jouant également un rôle très important dans la prévention des maladies cardio-vasculaires.

Les chaînes saturées des acides gras du lait allant de C4:0 à C16:0 sont essentiellement synthétisées au niveau des cellules du pis par l'apport d'acide acétique et butyrique venant du rumen. Les chaînes longues saturées et insaturées (c'est-à-dire ≥ C18) des acides gras du lait proviennent de l'alimentation.

Pour augmenter la teneur dans le lait de l'acide alpha-linolénique, il a été imaginé d'éviter la lipolyse ainsi que l'hydrogénation des acides gras alimentaires par les bactéries constituant la flore du rumen et dès lors, de garder intact le C18:3. Ceci devrait avoir pour résultat d'enrichir le flux sanguin en oméga 3 et par voie de conséquence également le lait.

Une technique connue (voir par exemple FR 2 768 025) est d'utiliser du formaldéhyde pour traiter des graines oléagineuses. Cette technique est toutefois interdite dans nos contrées de l'Union Européenne.

Une autre technique connue consiste à utiliser une substance plus naturelle que le formaldéhyde qui est le xylose, qui est un sucre réducteur du bois.

Cette technique fait par exemple l'objet du brevet US 5 789 001 qui se rapporte à un aliment inerte dans le rumen, obtenu par toastage de graines de lin. D'après l'enseignement de ce brevet, ledit aliment résiste partiellement à la dégradation bactérienne se produisant généralement lors de la fermentation anaérobie par la flore présente dans le rumen. Pour obtenir ce résultat, le brevet US 5 789 001 applique un sucre réducteur aux graines oléagineuses et chauffe les graines ayant subi un craquage pour obtenir une réaction de Maillard non enzymatique. Cette étape de chauffage est contrôlée pour assurer la pénétration du sucre réducteur à l'intérieur des graines oléagineuses avant le brunissement. La réaction de brunissement rend les protéines qui entourent l'huile résistantes à la dégradation par les bactéries du rumen et encapsule de cette manière l'huile dans une matrice protectrice.

Moyennant une humidité et une température contrôlées, entre les protéines et le sucre réducteur, il se crée une réaction de Maillard réversible qui a pour effet de diminuer la dégradabilité ruminale de la protéine de la graine oléagineuse.

Le brevet US 5 789 001 utilise à cette fin du xylose ou d'autres sucres réducteurs tels que le glucose, le fructose, le lactose, le mannose, le ribose et l'hémicellulose et le sucre réducteur préféré est le xylose.

Malheureusement, l'aliment pour vaches laitières selon le brevet US 5 789 001 donne des résultats mitigés sur la quantité d'oméga 3 présents dans le lait produit (voir exemple comparatif 1) et ne donne pas un lait plus diététique que celui obtenu dans le brevet EP 1 106 077 à apport égal de graines de lin et sûrement pas plus riche en oméga 3. En résumé, il n'existe pas réellement d'intérêt à utiliser un tel aliment pour le producteur de lait.

Il existe donc toujours un besoin de trouver des moyens permettant d'obtenir un lait plus riche en oméga 3, en particulier au sein de la famille des C18.

A cette fin, il a été imaginé d'ajouter du xylose à un aliment du type prévu dans le brevet EP 1 106 077, c'est-à-dire constitué au moins partiellement de graines de lin extrudées. Malheureusement, comme on peut également le constater à la lecture de l'exemple comparatif 2, les effets selon le brevet US 5 789 001 ne sont pratiquement pas observés sur les graines de lin extrudées. En effet, les cinétiques de biohydrogénation sont comparables avec ou sans xylose, ce qui laisse supposer que le transfert des oméga 3 n'est pas amélioré.

Le toastage utilisé pour le traitement avec le xylose selon le document US 5 789 001 est un processus de cuisson qui est plus long (minimum 20 minutes), mais moins élevé en température que l'extrusion. L'extrusion est un processus court en temps, 3 minutes de conditionnement et moins de 1 minute d'extrusion. Les températures atteintes par l'extrusion sont également plus élevées.

Il existe donc un réel besoin d'obtenir un lait plus riche en oméga 3 par rapport au lait obtenu en nourrissant les vaches laitières par un aliment pour vaches laitières selon le brevet EP 1 106 077.

A cette fin, il est prévu un aliment pour animaux producteurs de lait selon l'invention tel que mentionné au début comprenant en outre, au moins un sucre réducteur sous la forme d'un disaccharide comprenant au moins une unité fructose.

De manière surprenante, la présence d'au moins un sucre réducteur sous la forme d'un disaccharide comprenant au moins une unité fructose, a permis d'obtenir une augmentation inattendue de la teneur en acides gras de la famille des C18 totaux et une diminution des acides gras de la famille de C4:0 à C17:1 dans le lait.

Par les termes "un sucre réducteur sous la forme d'un disaccharide comprenant au moins une unité fructose, ", on entend un diholoside réducteur comprenant deux sous-unités dont une est une unité fructose. Dans le diholoside réducteur, la fonction pseudo-aldéhyde portée par le C1 d'un des deux oses est engagée dans une liaison osidique avec un hydroxyle de l'autre ose. La fonction pseudo-aldéhyde de l'autre ose reste libre, ce qui explique la nature réductrice de ces molécules.

En outre, il a été montré que la proportion dans le lait des C18 saturés et de C18 insaturés ne change pas au sein de la famille des C18 totaux. Dès lors, puisque la teneur en acides gras de la famille des C18 totaux augmente dans le lait et que la proportion de C18 saturés et insaturés ne change pas au sein de cette famille des C18 totaux, le lait obtenu est plus riche en C18 insaturés, et donc en oméga 3.

De plus, les C18:0 sont des acides gras saturés relativement neutres qui sont très peu néfastes pour la santé, tandis que les acides gras de la famille C12 à C16, lorsqu'ils sont ingérés en excès, sont des acides gras athérogènes, qui accélèrent le processus d'altération dégénérative des parois internes des vaisseaux sanguins avec formation d'une plaque jaunâtre de dépôts lipidiques.

Il résulte dès lors clairement de ceci que le lait obtenu suivant l'invention dans lequel la famille des C18 totaux est augmentée au détriment de la famille des C4:0 à C17:1 est avantageux d'un point de vue diététique.

Ceci vient du fait que l'hydrogénation des acides gras au niveau du rumen est inchangée avec l'utilisation dudit sucre réducteur sous la forme d'un disaccharide, contrairement à ce qui avait été enseigné dans le brevet US 5 789 001 pour des graines de lin toastées.

Il va de soi que l'utilité de l'aliment selon l'invention n'est clairement pas à démontrer puisqu'elle améliore les qualités diététiques du lait obtenu des vaches nourries par cet aliment.

En outre, lorsqu'une augmentation de la teneur en acides gras insaturés est observée dans une production de lait, elle est généralement associée à une chute de la teneur en matières grasses du lait que l'on appelle plus communément le "milk fat dépression". Lorsqu'une vache laitière reçoit une ration comprenant l'aliment selon l'invention, aucune chute significative du taux de matière grasse n'a été observée dans le lait ainsi produit.

L'enseignement du brevet US 5 789 001 tend à montrer que le xylose permet de protéger les graines de lin toastées de la dégradation microbienne par la flore du rumen et dès lors, d'éviter la biohydrogénation.

Toutefois, comme on peut le voir à l'exemple comparatif 2 et comme mentionné précédemment, il semble que ni le xylose ni le disaccharide réducteur susdit selon l'invention n'ait un effet sur la biohydrogénation et que le mécanisme impliqué soit autre. A l'heure actuelle, il n'est pas encore possible de déterminer la cause exacte de cette augmentation de la teneur en acides gras de la famille des C18 totaux.

Avantageusement, ledit un sucre réducteur sous la forme d'un disaccharide comprenant au moins une unité fructose est choisi dans le groupe constitué du turanose, du maltulose, du leucrose, du tréhalulose et de l'isomaltulose et leurs mélanges.

De préférence, ledit sucre réducteur comprend au moins de l'isomaltulose et/ou du tréhalulose, de préférence majoritairement en poids

En effet, ce sucre réducteur est particulièrement préféré car il est un sucre réducteur issu de la fabrication du sucre de betterave pour lequel peu de filières d'utilisation et de recyclage existent. Dès lors, l'utiliser dans l'alimentation pour animaux producteurs de lait représente une valorisation de ce produit tout en permettant d'offrir un lait dont les qualités diététiques sont supérieures.

Dans une forme de réalisation préférentielle, ledit sucre réducteur est présent en une quantité allant de 1 à 20% en poids par rapport au poids total de l'aliment est de préférence en une quantité d'environ 2 à 10 %, à 90 % de matière sèche. Il a en effet été montré que cette plage permettait le meilleur compromis entre le rendement obtenu et le coût des matières premières.

De manière avantageuse, la quantité de graines de lin extrudées est comprise entre 20 et 99% et est de préférence comprise entre 50 et 70 %, plus préférentiellement d'environ 60% en poids par rapport au poids total de la composition.

Dans une forme de réalisation particulière selon l'invention, l'aliment comprend en outre d'autres graines oléagineuses choisies parmi les graines de colza, coton, soja, tournesol, karité, sésame, canola et analogues.

En particulier, la proportion d'autres graines oléagineuses est comprise entre 1 et 80% en poids par rapport au poids total de l'aliment.

De cette façon, le taux de matière grasse totale obtenu dans l'aliment selon l'invention est compris entre 23 et 30 % en poids par rapport au poids de l'aliment.

En outre, selon l'invention, l'aliment peut en outre comprendre du blé et des graines de légumineuse et de préférence, sans qu'aucune limitation ne puisse y être attribuée, dans une quantité de blé de 1 à 30 % en poids par rapport au poids total de l'aliment et dans une quantité de graines de légumineuses comprise entre 1 et 20 % en poids par rapport au poids total de l'aliment.

D'autres formes de réalisation de l'aliment suivant l'invention sont indiquées dans les revendications annexées.

L'invention a aussi pour objet un procédé de fabrication d'un aliment extrudé pour animaux producteurs de lait comprenant les étapes de:
- dosage, broyage et homogénéisation de graines de lin, avec au moins un sucre réducteur sous la forme d'un disaccharide comprenant au moins une unité fructose, et éventuellement un ou plusieurs autre composant choisi parmi une autre graine oléagineuse ou une céréale, avec obtention d'un mélange comprenant au moins des graines de lin extrudées et un sucre réducteur,
- extrusion dudit mélange par voie humide à une température comprise entre 80 et 150 °C avec obtention d'un aliment extrudé, et
- séchage de l'aliment extrudé ainsi produit.

Comme on peut le constater, de cette façon, le procédé de fabrication est particulièrement simple, le sucre réducteur est extrudé simultanément avec les graines de lin, ce qui permet de ne pas ajouter une étape au procédé de fabrication déjà utilisé précédemment pour fabriquer un aliment pour animaux producteurs de lait. En outre, le procédé selon l'invention permet d'assurer une pénétration du sucre réducteur dans l'aliment selon l'invention.

De plus, le procédé d'extrusion prévu par la présente invention dans le procédé de fabrication dudit aliment, conserve ce pourcentage important d'Oméga 3 dans l'aliment suivant l'invention, fabriqué à base de graines de lin. En effet, la graine de lin s'avère être la graine oléagineuse la plus riche en C18:3 (Oméga 3) et la teneur finale d'Oméga 3 dans l'aliment est proportionnelle à celle de la graine oléagineuse utilisée pour fabriquer l'aliment. Cette proportionnalité est obtenue grâce au procédé d'extrusion utilisé dans la fabrication de l'aliment suivant l'invention.

Pour ce faire, on utilise un procédé d'extrusion de l'aliment. Ce procédé est un traitement hydrothermique aboutissant à la formation de complexes entre les lipides et l'amidon, les acides gras complexés échappant ainsi partiellement à l'hydrogénation. L'extrusion de l'aliment selon l'invention a les effets suivants : la gélatinisation de l'amidon, la protection des protéines et la destruction de facteurs antinutritionnels. Par exemple, dans le cas de graines de lin, l'extrusion permet de détruire des glucosides cyanogènes (linustatine, linamarine et néolinustatine) et la linatine qui est une molécule inhibitrice de l'action de la vitamine B6.

Avantageusement, ledit un sucre réducteur sous la forme d'un disaccharide comprenant au moins une unité fructose est choisi dans le groupe constitué du turanose, du maltulose, du leucrose, du tréhalulose et de l'isomaltulose, leurs dérivés, leurs isomères et leurs mélanges.

D'autres formes de réalisation du procédé suivant l'invention sont indiquées dans les revendications annexées.

L'invention a aussi pour objet un lait de vache susceptible d'être obtenu à l'aide de l'aliment selon l'invention. Le lait suivant l'invention comprend une première famille d'acides gras allant de C4:0 à C17:1 et une deuxième famille de C18 totaux, ladite première famille de C4:0 à C17:1 étant présente en une quantité de 44 à 58 g, de préférence de 44 à 57,5 g pour 100 g d'acides gras totaux et ladite deuxième famille des acides gras C18 totaux étant présente en une quantité allant de 42 g, de préférence de 42,5 g à 55,5 g pour 100 g d'acides gras totaux. Le lait suivant l'invention est caractérisé en ce que la valeur du rapport des teneurs oméga 6 / oméga 3 au sein de la famille des C18 est comprise entre 1,7 et 1,3.

Un lait standard comprend des acides gras de la première famille (C4:0 à C17:1) à raison d'environ 63 à 70 g pour 100 g d'acides gras totaux et des acides gras de la famille des C18 totaux à raison d'environ 30 à 37 g pour 100 g d'acides gras totaux.

Ladite première famille comporte environ 10% d'acides gras insaturés tandis que ladite deuxième famille comporte environ 70 % d'acides gras insaturés. Il est donc clair qu'un lait dans lequel la teneur en acides gras de ladite deuxième famille est augmentée au détriment de la teneur en acides gras de ladite première famille présentera une teneur globale en acides gras insaturés augmentée.

Il a été montré à plusieurs reprises que les acides gras insaturés sont préférables d'un point de vue diététique. Dès lors, un lait présentant une teneur en acides gras insaturés augmentée sera diététiquement plus favorable et bien plus avantageux.

Le lait suivant l'invention présente, comme on peut le constater une teneur en acides gras de ladite deuxième famille qui est augmentée par rapport à un lait standard (d'environ 30 à 37 g à une plage de 40 à 55,5 g pour 100 g d'acides gras totaux). Cette augmentation des acides gras de la famille des C18 totaux se fait au détriment de la teneur en acides gras de ladite première famille qui passe d'environ 64 à 70 g à une quantité de 44 à 60 g pour 100 g d'acides gras totaux. Le lait suivant l'invention présentera donc une teneur globale en acides gras insaturés augmentée.

En outre, le lait suivant l'invention est caractérisé par une valeur du rapport des teneurs oméga 6 / oméga 3 qui est comprise entre 1 et 2.

Dans notre alimentation, certains acides gras sont essentiels car notre métabolisme n'est pas capable de les synthétiser. Ces acides gras doivent impérativement se trouver dans notre alimentation. C'est le cas de certainsoméga 6 et des oméga 3 de la famille des C18.

Il a été mis en évidence que ces deux acides gras susdits doivent être présents dans notre alimentation dans un rapport prédéterminé. En effet, les voies métaboliques de ces acides gras impliquent les mêmes enzymes. Si la quantité d'oméga 6 est en excès, la voie métabolique de l'oméga 3 sera lésée et la quantité d'oméga 3 métabolisée sera insuffisante. Dès lors, puisque les oméga 3 et 6 sont en compétition pour leur métabolisation, l'idéal est qu'ils soient au départ présents dans notre alimentation dans une proportion idéale.

L'Organisation Mondiale de la santé préconise un rapport Oméga 6/Oméga 3 inférieur à 5/1. Par ailleurs, on sait que quantité d'aliment ont un rapport supérieur à 10/1. Il est donc clair de ce qui précède que tout produit nouveau comme par exemple le lait suivant l'invention évoluant vers un rapport Oméga 6/Oméga 3 inférieur à 5/1 est favorable pour que notre alimentation globale soit mieux équilibrée. En outre, un produit ayant un rapport oméga 6 / oméga 3 compris entre 2,5/1 et 1/1 est largement plus favorable au point de vue diététique.

De préférence, la deuxième famille des acides gras C18 totaux (C18:0, C18:1, C18:2, C18:3) est constituée de C18 saturés (C18:0) et de C18 insaturés (C18:1, C18:2, C18:3) et présente une teneur en C18 saturés allant de 28 à 35 % en poids par rapport au poids de C18 totaux et une teneur en C18 insaturés allant de 65 à 72 % en poids par rapport au poids de C18 totaux.

Selon l'invention, le lait présente une teneur en acide gras C18:1 *trans-10* équivalente à celle obtenue avec un ruminant alimenté de manière conventionnelle.

En effet, il peut arriver que la teneur en acides gras insaturés du lait soit augmentée, mais ce phénomène est généralement associé à une chute du taux de la matière grasse présente dans le lait. La chute du taux de matière grasse dans le lait est généralement accompagnée d'une augmentation de la teneur en C18:1 *trans*-10, qui reflète le passage par une autre voie de biohydrogénation des acides gras de la famille de C18.

En effet, la voie préférée de biohydrogénation de l'acide linoléique (C18:2 cis-9,12) passe par l'acide ruménique (C18-2 *cis*-9 *trans-*11), par l'acide vaccénique (C18:1 *trans-*11) pour finalement être transformé en acide stéarique C18:0. Si le métabolisme de biohydrogénation préférée est détourné vers l'autre voie de biohydrogénation, dans ce cas, l'acide linoléique (C18:2 *cis*-9,12) est transformé en acide linoléique conjugué C18:2 *trans-*10*, cis*-12 et ensuite en C18:1 *trans*-10 pour finalement être transformé en acide stéarique C18:0. Le C18:1 *trans*-10 présent dans le lait est représentatif du détournement de la voie de biohydrogénation de l'acide linoléique. Ce détournement est généralement associé à une chute du taux de matière grasse du lait.

Selon l'invention, le lait obtenu présente un taux d'acide gras insaturés et d'oméga 3 amélioré, sans augmentation de la teneur en C18:1 *trans*-10 (la teneur est C18:1 *trans-10* reste constante). Ce qui signifie que le lait suivant l'invention n'a pas subit de détournement de la voie de biohydrogénation préférée de l'acide linoléique en faveur de l'autre voie. La teneur en C18:1 *trans*-10 du lait suivant l'invention est similaire à celle du lait qui aurait été obtenu lors de la traite de la même vache alimentée par une alimentation conventionelle.

En outre, avantageusement, le lait selon l'invention comprend de l'acide stéarique (C18:0) provenant majoritairement de l'hydrogénation d'une partie de l'acide vaccénique (C18:1 *trans*-11). Ceci signifie qu'il n'y a pas eu de détournement de la voie de biohydrogénation préférée en faveur de l'autre voie de biohydrogénation de l'acide linoléique (C18:2 *cis*-9,12).

Avantageusement, la teneur en C18:1 *trans*-10 du lait suivant l'invention est comprise entre 0,1 et 0,7 g pour 100 g d'acides gras totaux.

Dans une forme de réalisation particulière, le lait suivant l'invention présente le spectre d'acides gras suivant pour 100 g d'acides gras totaux, déterminée en chromatographie en phase gazeuse:

| Pour les acides gras saturés à chaîne courte | |
|---|---|
| Acide caproïque C6:0 | 1,4 à 2,24 g |
| Acide caprylique C8:0 | 0,83 à 1,33 g |
| Acide caprique C10:0 | 1,33 à 3,49 g |
| Acide Laurique C12:0 | 2,00 à 3,53 g |
| Acide myristique C14:0 | 8,0 à 10,8 g |
| Acide palmitique C16:0 | 18,8 à 26,2 g |

| Pour les acides gras saturés à chaîne longue | |
|---|---|
| Acide stéarique C18:0 | 10,4 à 15,5 g |

| Pour les acides gras insaturés à chaîne longue | |
|---|---|
| Acide vaccénique C18:1 *trans*-11 | 2,10 à 5,0 g |
| Acide oléique C18:1 *cis*-9 + *cis*-11 | 19,9 à 25,5 g |
| Acide linoléique C18:2 *cis*-9-12 | 1,33 à 3,24 g |
| Acide linoléique C18:2 *trans*-9-12 | 0,4 à 0,8 g |
| Acide linolénique C18:3 *cis*-8-12-15 | 0,5 à 1,5 g |
| Acide gras conjugué (acide ruménique C18-2 *cis*-9 *trans*-11 | 0,58 à 2,78 g |
| Autres acides gras | 16 à 18 g |

D'autres formes de réalisation du lait de vache suivant l'invention sont indiquées dans les revendications annexées.

L'invention a aussi pour objet une utilisation d'un aliment suivant l'invention, pour la réalisation d'une ration alimentaire destinée à une vache laitière.

Dans une forme d'utilisation particulière, ledit aliment est ajouté à une ration alimentaire quotidienne à base de fourrage hivernal qui est choisi notamment parmi: ensilage de maïs, ensilage d'herbe, foin par exemple, à l'aide d'une dose d'aliment correspondant à de 6 à 12% de matière sèche totale ingérée est ajoutée à la ration alimentaire quotidienne à base de fourrage hivernal.

Dans une autre forme d'utilisation particulière, ledit aliment est ajouté à une ration alimentaire quotidienne à base d'herbe pâturée, par exemple, à l'aide d'une dose d'aliment correspondant à de 0,5 à 1,5 kg de matière sèche est ajoutée à la ration alimentaire quotidienne à base d'herbe pâturée.

L'invention se rapporte également à une utilisation d'un sucre réducteur sous la forme d'un disaccharide comprenant au moins une unité fructose, en combinaison avec des graines de lin extrudées dans l'alimentation des ruminants

D'autres caractéristiques, détails et avantages de l'invention ressortiront de la description donnée ci-après, à titre non limitatif et en faisant référence aux exemples.

Les symboles suivants seront utilisés dans la description : par exemple C10:0, C18:2 qui sont bien connus de l'homme de l'art.

Pour fabriquer un aliment suivant la présente invention, un protocole d'extrusion sous voie humide a été mis au point.

Dans un mode de réalisation préféré, ce protocole comprend les étapes suivantes.

Les ingrédients entrant dans la composition de l'aliment pour animaux producteurs de lait sont tout d'abord sélectionnés puis pesés. L'aliment suivant l'invention de cette forme de réalisation particulière comprend les composants suivants : 57 % de graines de lin extrudées, 15,7 % de schroot de tournesol, 14,29 % de froment moulu, 4,7 % de haricots et lentilles, 0,034 % de BHT (hydroxytoluène butylique), 0,1 % en poids de vitamine E50 et 0,47 % de sel. Ces ingrédients sont alors broyés. La farine obtenue est stockée dans un silo avant l'extrusion.

De préférence, on utilisera suivant l'invention un mélange de sucre réducteur comprenant de l'isomaltulose principalement ainsi que d'autres sucres.

Le mélange de sucres réducteurs utilisé de préférence selon l'invention présente la composition illustrée au tableau 1.

**Tableau 1**

| | |
|---|---|
| Fructose | 12 ± 3 (% matière sèche) |
| Glucose | 9 ± 2 (% matière sèche) |
| Sucrose | 10 ± 3 (% matière sèche) |
| Isomaltulose | 30 ± 5 (% matière sèche) |
| Tréhalulose | 27 ± 3 (% matière sèche) |
| Isomaltose | 5,5 ± 2 (% matière sèche) |
| Oligomères et autres | 3 ± 1 (% matière sèche) |
| Cendres | < 0,5 (% matière sèche) |
| Teneur en matière sèche | 67 ± 3 (% en poids par rapport au poids total de la composition) |
| pH | 5-6 |

Dans le tableau 1, "% matière sèche" signifie le % en poids par rapport au poids de matière sèche.

L'extrusion comporte les trois étapes suivantes :
- le conditionnement de la farine : elle est chauffée à une température comprise entre 80 et 95°C en injectant de la vapeur de 500 à 900 kg/h et d'eau à raison de 2 à 3 l/min, et mélangée avec ledit sucre réducteur sous la forme d'un disaccharide à raison d'environ 9% en poids par rapport au poids de matière sèche,
- l'extrusion proprement dite : la farine conditionnée est amenée dans l'extrudeur et subit une élévation de température allant jusqu'à une température comprise entre 80 et 150°C avec une injection de vapeur de 500 à 900 kg/h et de 2 à 3 l d'eau/min,
- le séchage : à la sortie de l'extrudeuse, la croquette formée est séchée dans un séchoir comportant trois zones, une première zone de séchage à 75°C, une deuxième zone de séchage à 85°C et une zone de refroidissement.

L'ensemble des trois étapes dure 45 min. Le produit final est un aliment qui a un taux d'humidité maximum de 9%. L'ensemble du procédé d'extrusion se fait à un débit de 4500 à 5000 kg/h.

Des vaches laitières ont été nourries avec une ration de base telle qu'illustrée au tableau 2.

**Tableau 2.-**

| ALIMENT ET FOURRAGE | KILO BRUT PAR VACHE ET PAR JOUR |
|---|---|
| Ensilage d'herbe (à 47,90 % MS) | 8 |
| Ensilage d'herbe (à 40,80 % MS) | 16 |
| Ensilage de maïs (à 34,70 % MS) | 11 |
| Pulpes surpressées (à 24 % MS) | 6 |
| Drèches de brasserie (à 24 % MS) | 3 |
| Aliment selon l'invention | 2,2 |
| Concentré de minéraux et de vitamines | 0,3 |

Les vaches laitières ont reçu 1 kilo d'un aliment de production conventionnel par 2,5 litres de lait produit au-dessus de 26 litres de lait produit.

La ration de base présentait la valeur nutritionnelle illustrée au tableau 3.

**Tableau 3.-**

| | |
|---|---|
| % de matière azotée totale (en poids par rapport au poids total de la ration de base) | 16,3 |
| % de cellulose (en poids par rapport au poids total de la ration de base) | 21,7 |
| Unité fourragère lait par kilo de matière sèche | 0,95 |
| Protéine digestible au niveau intestinal (azote limitant) PDIN (g/Kg de matière sèche) | 104 |
| Protéine digestible au niveau intestinal (énergie limitant) PDIE (g/Kg de matière sèche) | 102 |
| Protéine digestible au niveau intestinal (d'origine alimentaire) PDIA (g/Kg de matière sèche) | 52 |

Le nombre de vaches traitées (Pie Noire Holstein) est de 47. Le niveau de production moyen est de 26 litres à 42 ‰ de matière grasse et à 35 ‰ de protéines.

Au 61^{ème} jour, l'aliment selon l'invention n'a plus été distribué aux vaches laitières. Toutefois, elles ont reçu le même aliment extrudé mais ne contenant plus de sucre réducteur.

L'aliment selon l'invention contient 9 % en poids par rapport au poids de l'aliment du mélange de sucres réducteurs présenté au tableau 1. Le mélange de sucres réducteurs présente une teneur en matière sèche de 67 %, dès lors, l'aliment selon l'invention a été complémenté de 6,7 % du mélange de sucres réducteur du tableau 1, ramenée à 90% de matière sèche

L'aliment selon l'invention présentait en outre la composition illustrée au tableau 4. Les valeurs mentionnées sont des % en poids par rapport au poids total de la composition.

**Tableau 4.-**

| | |
|---|---|
| Graines de lin | 57% |
| Schroot de tournesol | 15,7 % |
| Froment moulu | 14,29 % |
| Haricots lentilles | 4,7 % |
| BHT | 0,034 % |
| Vitamine E50 | 0,1 % |
| Sel | 0,47 % |
| Mélange de sucres réducteurs (selon le tableau 1.-) à 91% de matière sèche | 6,7 % |
| Teneur en matières grasses | > 23 % |

Le lait produit par les vaches laitières a été analysé à intervalles réguliers. Les résultats sont illustrés au tableau 5. les valeurs indiquées sont exprimées en % en poids d'acide gras par 100 g d'acides gras totaux.

Le standard est un lait produit par des vaches laitières de la même race, mais ayant reçu une alimentation conventionnelle, c'est-à-dire une ration de base telle que présentée au tableau 2, sans aliment selon l'invention.

**Tableau 5**

| | standard | J10 | J16 | J25 | J28 | J38 | J40 | J46 | J55 | J61 | J67 |
|---|---|---|---|---|---|---|---|---|---|---|---|
| % d'acides gras insaturés | 29,62 | 37,8 | 38,4 | 39,1 | 38,8 | 39,0 | 39,6 | 40,2 | 41,4 | 40,3 | 40,7 |
| % d'oméga 3 | 0,45 | 1,18 | 1,2 | 1,27 | 1,23 | 1,19 | 1,17 | 1,2 | 1,21 | 1,16 | 1,21 |
| première famille d'acides gras allant C4:0 à C17:1 | 63,64 | 51,59 | 51,34 | 48,37 | 48,82 | 48,62 | 47,3 | 46,86 | 45,46 | 46,61 | 46,24 |
| Deuxième famille des C18 | 33,76 | 42,86 | 43,01 | 46,07 | 45,78 | 45,64 | 47,06 | 47,44 | 48,96 | 47,86 | 47,26 |
| Rapport C18:0/C18 totaux | 0,30 | 0,31 | 0,30 | 0,32 | 0,32 | 0,32 | 0,32 | 0,32 | 0,31 | 0,32 | 0,32 |
| Rapport C18:3/C18 totaux | 0,011 | 0,024 | 0,024 | 0,024 | 0,024 | 0,023 | 0,022 | 0,022 | 0,022 | 0,020 | 0,020 |
| C4:0 | 3,71 | 3,69 | 3,44 | 3,66 | 3,93 | 3,83 | 3,58 | 4,11 | 3,82 | 3,98 | 3,75 |
| C6:0 | 2,21 | 2,07 | 2,04 | 2,02 | 2,1 | 2,03 | 1,94 | 2,04 | 1,89 | 1,99 | 1,88 |
| C8:0 | 1,32 | 1,19 | 1,21 | 1,14 | 1,16 | 1,11 | 1,07 | 1,06 | 1,00 | 1,02 | 0,99 |
| C10:0 | 2,87 | 2,46 | 2,56 | 2,27 | 2,26 | 2,18 | 2,1 | 2,04 | 1,89 | 1,97 | 1,88 |
| C12:0 | 4,05 | 2,73 | 2,81 | 2,46 | 2,42 | 2,38 | 2,28 | 2,18 | 2,06 | 2,12 | 2,05 |
| C14:0 | 11,55 | 9,79 | 9,76 | 9,16 | 9,05 | 8,99 | 8,65 | 8,36 | 8,03 | 8,26 | 8,15 |
| C16:0 | 31,16 | 23,98 | 23,7 | 22,23 | 22,48 | 22,55 | 22,29 | 21,83 | 21,64 | 21,84 | 22,21 |
| C18:0 | 10,22 | 13,11 | 12,76 | 14,63 | 14,53 | 14,51 | 15,27 | 15 | 15,33 | 15,25 | 15,15 |
| C18:1 trans 10 | 0,33 | 0,41 | 0,38 | 0,27 | 0,34 | 0,34 | 0,33 | 0,31 | 0,34 | 0,35 | 0,33 |
| C18:1 trans 11 | 0,89 | 3,14 | 2,82 | 3,02 | 3,05 | 2,96 | 2,86 | 3,01 | 3,15 | 2,77 | 2,8 |
| C18:1 cis (total) | 19,06 | 20,02 | 21,18 | 22,25 | 21,94 | 22,19 | 23,11 | 23,67 | 24,26 | 24,07 | 23,62 |
| C18:2 cis 9,12 (n-6) | 1,45 | 1,59 | 1,65 | 1,65 | 1,57 | 1,53 | 1,55 | 1,55 | 1,6 | 1,55 | 1,53 |
| C18:3 cis 8,12.15 (n-3) | 0,39 | 1,02 | 1,05 | 1,11 | 1,08 | 1,04 | 1,01 | 1,05 | 1,05 | 0,98 | 0,99 |
| C18:2 cis 8,t11 (CLA) | 0,51 | 1,24 | 1,15 | 1,14 | 1,16 | 1,17 | 1,11 | 1,12 | 1,16 | 1,06 | 1,04 |
| Autres acides gras | 10,28 | 13,56 | 13,49 | 12,99 | 12,93 | 13,19 | 12,85 | 12,67 | 12,78 | 12,79 | 13,63 |
| Oméga 6/omega 3 | 3,72 | 1,55 | 1,57 | 1,48 | 1,45 | 1,47 | 1,48 | 1,47 | 1,52 | 1,58 | 1,54 |

Comme on peut le constater, la deuxième famille des C18 totaux augmente, mais sans que la quantité d'acides gras présents dans le lait diminue, il n'y a donc pas eu de "milk fat depression" lorsque les vaches laitières ont reçu une alimentation complémentée par l'aliment selon l'invention. De plus le taux d'acide gras C18:1 *trans*-10 reste parfaitement constant, il n'y a pas de shift (détournement de la voie d'hydrogénation comme mentionné précédemment), engendrant une accélération de la métabolisation de la matière grasse laitière.

De même, de manière surprenante, on observe que le lait va subir une constante évolution jusqu'au jour 55. En règle générale, lorsque l'alimentation de vaches laitières est modifiée, le spectre d'acides gras du lait se stabilise après 15 jours environ.

Comme on peut le voir, le lait selon l'invention présente une teneur en C18:1 10-trans qui reste stable et faible (<0,7 g/100 g d'acides gras totaux) et le taux butyreux, non présenté est également resté stable.

Comme on l'a mentionné ci-avant, dans le lait suivant l'invention, la deuxième famille des C18 totaux augmente au détriment des C4:0 - C17:1, ce qui donne, en résumé les résultats présentés au tableau 6.

**Tableau 6**

| | Standard | Lait plus | J16 début | J40 milieu | J55 fin | Différence J40/stand. | Différence J55/stand | Différence J55/plus |
|---|---|---|---|---|---|---|---|---|
| Première famille C4:0-C17/1 | 63,64 | 52.9 | 51,34 | 47,3 | 45,46 | - 25 % | -29 % | -14% |
| Deuxième famille C18 totaux | 33,76 | 41.88 | 43,01 | 47,06 | 48,96 | +39.4 % | + 45 % | + 16 % |
| C18:3 | 0,39 | 0.93 | 1,05 | 1,04 | 1,05 | +160 % | +169 % | +13 % |
| C18:0/C18 totaux | 0,30 | 0.32 | 0,30 | 0,32 | 0,31 | Néant | Néant | Néant |
| C18:3/C18 totaux | 1,15 | 2.22 | 2.44 | 2,21 | 2,15 | 192 % | 186% | Néant |

Le "lait plus" est un lait obtenu avec le même aliment que celui selon l'invention, donc contenant des graines de lin extrudées, mais ne contenant pas de sucre réducteur sous la forme d'un disaccharide.

Les résultats présentés aux trois premières lignes du tableau sont exprimés en % en poids par rapport au poids total des acides gras.

Ce phénomène d'augmentation graduelle de la famille des C18 totaux est complètement neuf et surprenant car généralement, on atteint très vite, après 15 jours, une stabilité du spectre d'acides gras.

Il semble que la famille des C18 provenant des graines oléagineuses est mieux transférée vers le lait sans aucune modification de lipolyse ou de biohydrogénation puisqu'au sein de la deuxième famille des C18, les différents acides gras gardent la même proportion entre eux.

En conséquence, au vu de l'augmentation de la teneur en acides gras de la famille des C18, on peut observer les proportions entre saturés et insaturés illustrées au tableau 7.

**Tableau 7.-**

| | standard | Lait plus | J40 milieu | J55 fin | Différence J40/stand. | Différence J55/stand | Différence J55/plus |
|---|---|---|---|---|---|---|---|
| saturés | 70,4 | 64 | 60,4 | 58,7 | -14,2 % | -16,6 % | -8,3 % |
| insaturés | 29,6 | 36 | 39,6 | 41,3 | + 33.8 % | + 39. 5% | +14,7 % |

Les résultats présentés sont exprimés en % en poids par rapport au poids total des acides gras totaux du lait.

Il semblerait que le mélange de sucres réducteurs sous la forme d'un disaccharide susdit dans l'aliment selon l'invention augmente de
- 12 à 17 % la présence des acides gras de la famille des C18 de la matière grasse du lait par rapport à un lait obtenu par un aliment identique à celui selon l'invention, mais ne contenant pas de sucre réducteur (voir "lait plus"), et
- 9 à 15 % la présence des acides gras insaturés dans la matière grasse laitière par rapport à un "lait plus".

En outre, le rapport oméga 6 / oméga 3 au sein de la famille des C18 est compris entre 1 et 2,5, alors que pour un lait plus il était compris entre 2,5 et 5. Dès lors, le rapport est plus avantageux d'un point de vue diététique.

Par rapport à un lait standard, l'aliment selon l'invention permet d'augmenter de
- 38 à 47 % la présence des acides gras de la famille des C18 de la matière grasse du lait, et
- 32 à 40 % la présence des acides gras insaturés dans la matière grasse laitière.

Le rapport oméga 6 / oméga 3 au sein de la famille des C18 du lait standard était d'environ 3,71, ce qui est moins favorable que le lait obtenu avec l'aliment suivant l'invention.

En outre, l'équilibre entre les différents acides gras ainsi que la teneur en matières grasses de l'aliment selon l'invention sont proportionnellement conformes aux recommandations selon le brevet EP 1 106 077.

Comme on le sait déjà du brevet EP 1 106 077, l'alimentation humaine doit impérativement fournir tout au long de la vie les deux acides gras essentiels que sont l'acide linoléique (C18:2 Oméga 6) et l'acide alpha-linolénique (C18:3 Oméga 3). Ces acides gras conduisent, après leur absorption, à la synthèse spécifique d'acides gras polyinsaturés à plus longue chaîne tels que l'acide arachidonique et l'acide docosahexaénoïque (DHA) que l'on retrouve dans toutes les membranes biologiques. Le rapport des Oméga 6 par rapport aux Oméga 3 doit donc, comme on l'a mentionné ci-avant rester relativement équilibré et de préférence inférieur à 5 d'après les recommandations de l'Organisation mondiale de la santé. En outre, au plus ce rapport est proche de 1 au meilleures sont les qualités diététiques du produit.

Ce rapport est également équilibré dans le lait de l'invention, comme dans le lait selon le brevet EP 1 106 077, par rapport au lait produit par des vaches nourries à base d'aliment classique. Toutefois, dans le lait suivant l'invention le rapport est compris entre 1 et 2,5 et est plus préférentiellement compris entre 1 et 2. D'ailleurs, en moyenne, comme on a pu l'observer dans le tableau 5, il atteint seulement 1,5 ce qui est une valeur particulièrement avantageuse au niveau diététique.

En outre, le brevet EP 1 106 077 enseigne déjà un lait riche en CLA. Cet acide gras est très important (C18:2 cis-9 trans-11). Les matières grasses du lait en contiennent beaucoup plus que les matières grasses d'origine végétale. Or il a été démontré expérimentalement que le CLA est capable d'empêcher la prolifération des cellules cancéreuses. Le lait de l'invention est également plus riche en CLA que le lait standard produit par des vaches n'ayant pas d'aliment de l'invention dans leur régime alimentaire.

De plus, le rapport C16:0/C18:1 cis, connu de l'homme de l'art pour représenter l'index de dureté et de tartinabilité des matières grasses du lait, a une valeur telle que le beurre fabriqué à partir du lait de l'invention est frigotartinable.

### EXEMPLE COMPARATIF 1

On a alimenté des vaches laitières en supplémentant le fourrage de 2 kg d'un aliment pour vaches laitières selon le brevet EP 1 106 077, ce qui correspond à une ingestion de 250 g de C18:3 par vache et par jour. Toutefois, le transfert vers le lait est relatif, puisque ce dernier exporte de manière journalière:
1,2 % (% des acides C18:3 dans 100 g d'acides gras du lait)
X 40 g/L (teneur en matières grasses du lait)
X 30 L (production moyenne journalière d'une vache)
14,4 g pour 250 g ingéré, soit donc 5,8 % en poids.

Un kilo de matière sèche ingérée supplémentée par l'aliment selon le brevet EP 1 106 077 (fourrage et aliment selon l'invention) contient 60 g de graines de lin extrudées, (contenant 6 % en poids de graines de lin extrudées) et permet d'obtenir un lait contenant de 1,10 à 1,20 % en poids de C18:3 par rapport au poids des acides gras totaux du lait.

On a ensuite analysé l'aliment composé de graines de lin thermotraitée (ou toastée) et de xylose, selon le document US 5 789 001.

Un kilo de matière sèche ingérée contient 78 g de graines de lin toastées au xylose, (c'est-à-dire que cet aliment contient 7,8 % en poids de graines de lin toastées au xylose) et permet d'obtenir un lait contenant de 1,37 à 1,42 % en poids de C18:3 par rapport au poids des acides gras totaux du lait.

De cette analyse, il ressort clairement qu'en utilisant 30% [(7,8 X 100)/(6X100)] de plus de graines de lin, on obtient seulement 21 % d'oméga 3 (1,40/1,15, c'est-à-dire le rapport entre la moyenne des oméga 3 obtenus avec l'aliment du brevet US 5 789 001 et la moyenne des oméga 3 obtenus avec l'aliment du brevet EP 1 106 077, le tout exprimé en % en poids par rapport au poids des acides gras totaux dans le lait).

Comme on peut le voir les résultats obtenus avec les graines de lins extrudées seules sont légèrement supérieurs à ceux obtenus avec les graines de lin toastées au xylose. En effet, à quantité de graines de lin égale ramenée à 50 g, on obtient selon le brevet US 5 789 001, 0,89 g de C18:3 (= (1,37 + 1,42)/2 X 50/78).

Selon le brevet EP 1 106 077, on obtient pour 50 g de graines de lin extrudées, 0,95 g de C18:3 (=(1,10 + 1,20)/2 X 50 / 60).

### EXEMPLE COMPARATIF 2

Comparaison *in vitro* de la biohydrogénation dans le rumen d'un aliment de type US 5 789 001 avec un aliment de type EP 1 106 077.

Des quantités connues d'aliments ont été incubées en présence de foin, de jus de rumen et de solution tampon pour reproduire le plus exactement possible les conditions du rumen, en tenant compte du pH du milieu, de la température, des mouvements péristaltiques et des conditions anaérobies constantes.

Dans des récipients de 100 ml, on a pesé 150 mg d'aliments préalablement moulus (moulin avec une grille de 1 mm) et on a ajouté 400 mg de foin également préalablement moulu (moulin avec une grille de 0,5 mm). Les tests ont été réalisés en duplicats.

Les aliments ont été incubés pendant des temps différents de 0, 3, 6, 12, 18 et 24 heures.

Du jus de Rumen a été prélevé sur une vache canulée et filtré à travers un tamis de 0,5 mm de maille. Le jus de rumen a été conservé dans une enceinte thermostatisée et dilué avec une solution tampon reproduisant les conditions de la salive des ruminants. Les conditions anaérobies ont été maintenues par barbotage de CO₂ qui a également permis d'ajuster le pH à 6,9.

On a ajouté 50 ml de ce mélange de jus de rumen et de tampon aux récipients contenant les aliments et on a saturé l'atmosphère de ces récipients en CO₂. Les bouteilles ont été placées dans une enceinte thermostatisée à 39°C sous agitation à 160 tour/min. Au terme des intervalles de temps prédéterminés, on a placé les bouteilles dans un bain d'eau glacée afin d'arrêter toute activité microbienne de la flore du rumen.

Les aliments testés sont les suivants:
1. aliment extrudé à base de graines de colza
2. aliment extrudé à base de graines de colza auquel 1% en poids de xylose a été ajouté, avant l'extrusion.
3. aliment extrudé à base de graines de lin
4. aliment extrudé à base de graines de lin auquel 1 % en poids de xylose a été ajouté, avant l'extrusion.
5. aliment extrudé à base de graines de lin auquel 4,5 % en poids du mélange de sucre réducteur présenté au tableau 1 ont été ajoutés, avant l'extrusion.
6. aliment extrudé à base de graines de lin auquel 8 % en poids du mélange de sucre réducteur présenté au tableau 1 ont été ajoutés, avant l'extrusion

De chaque échantillon, les acides gras ont été extraits et méthylés. Ensuite, une chromatographie en phase gazeuse a été réalisée en vue de déterminer la teneur relative des acides gras d'intérêts dans les différents échantillons.

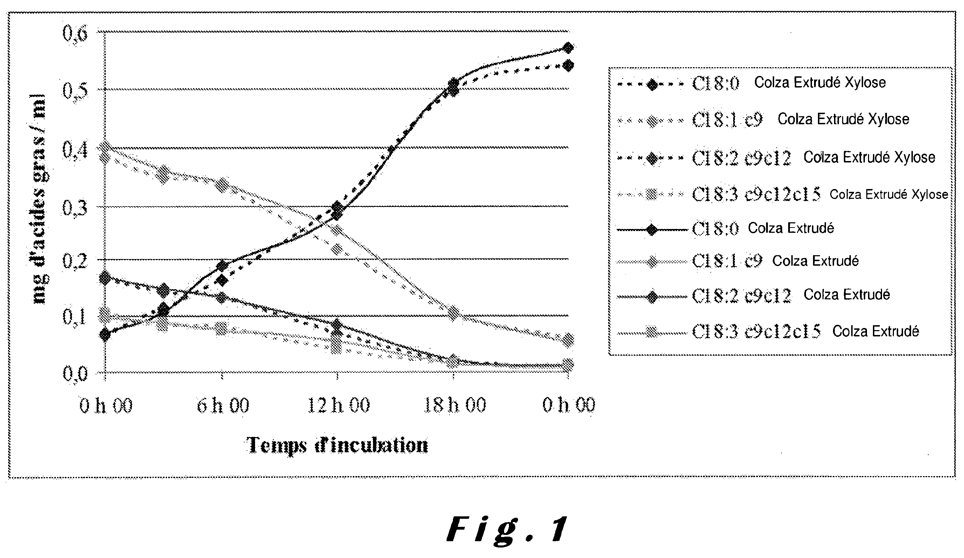

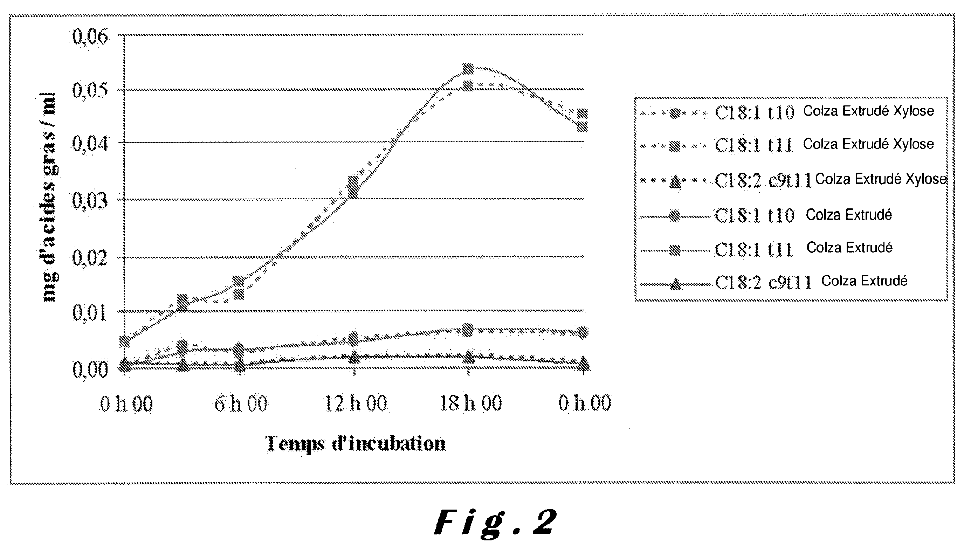

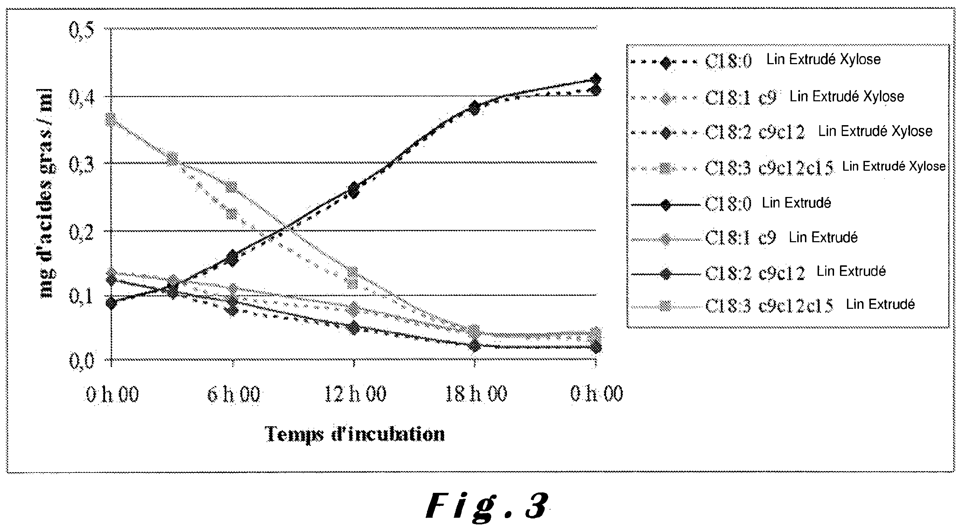

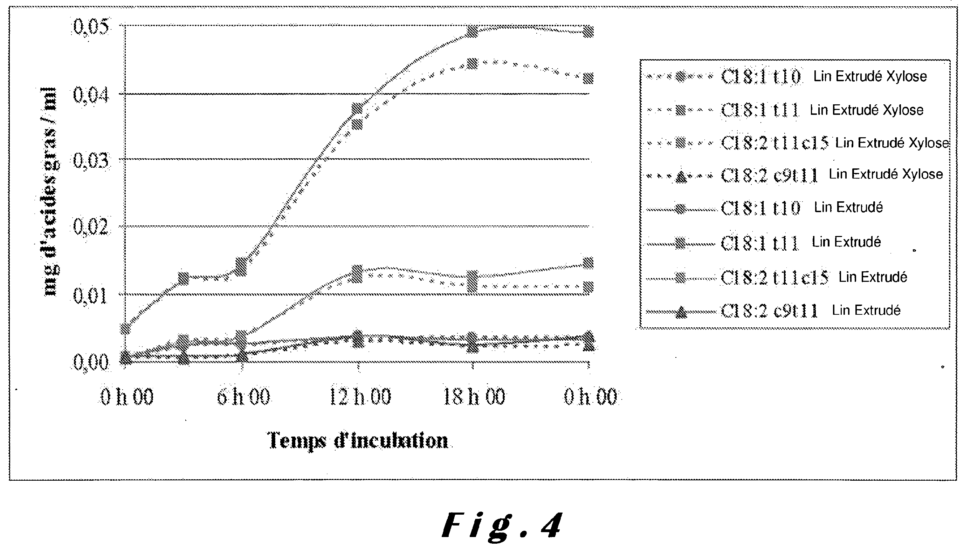

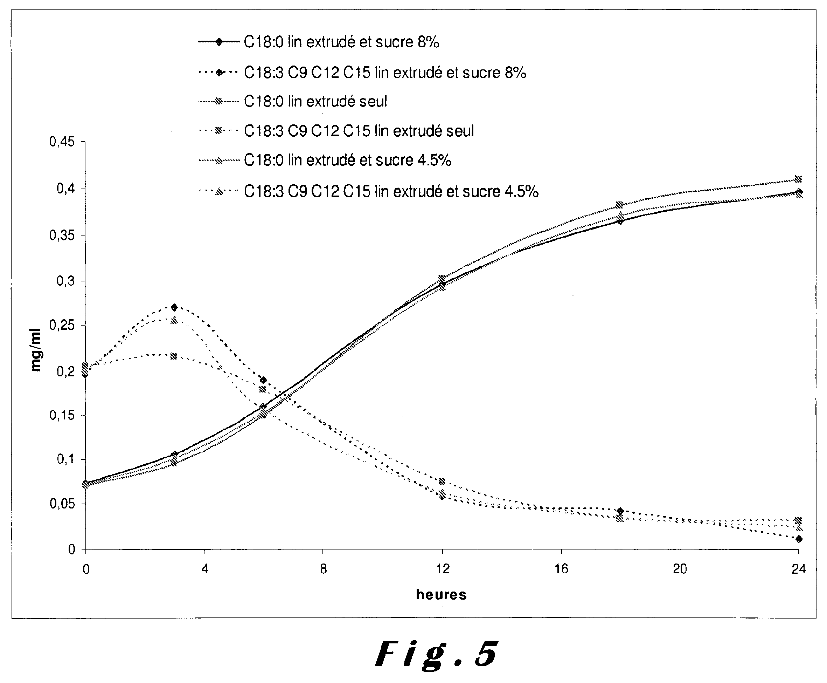

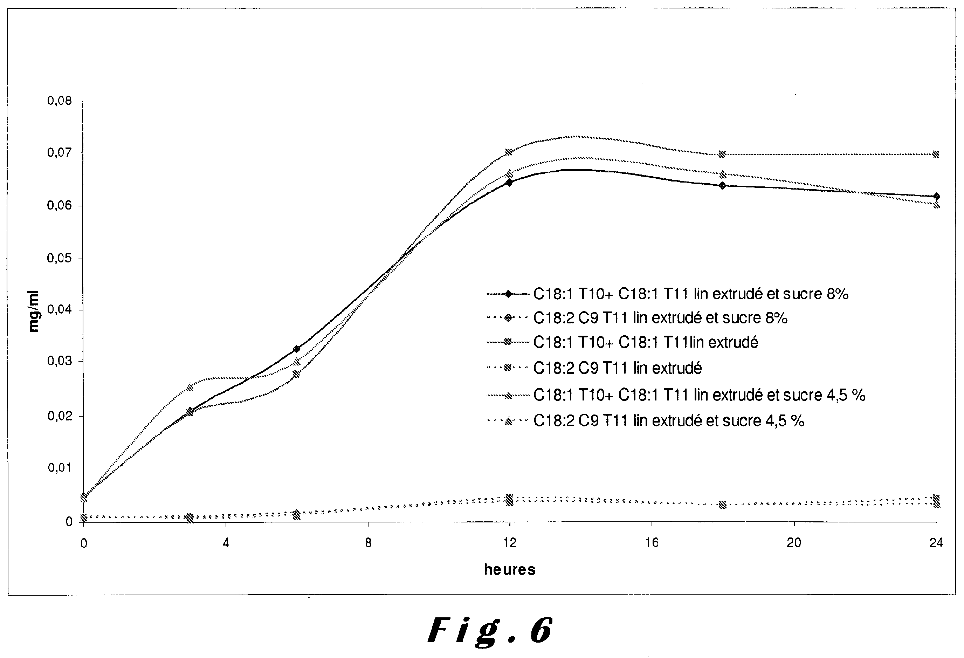

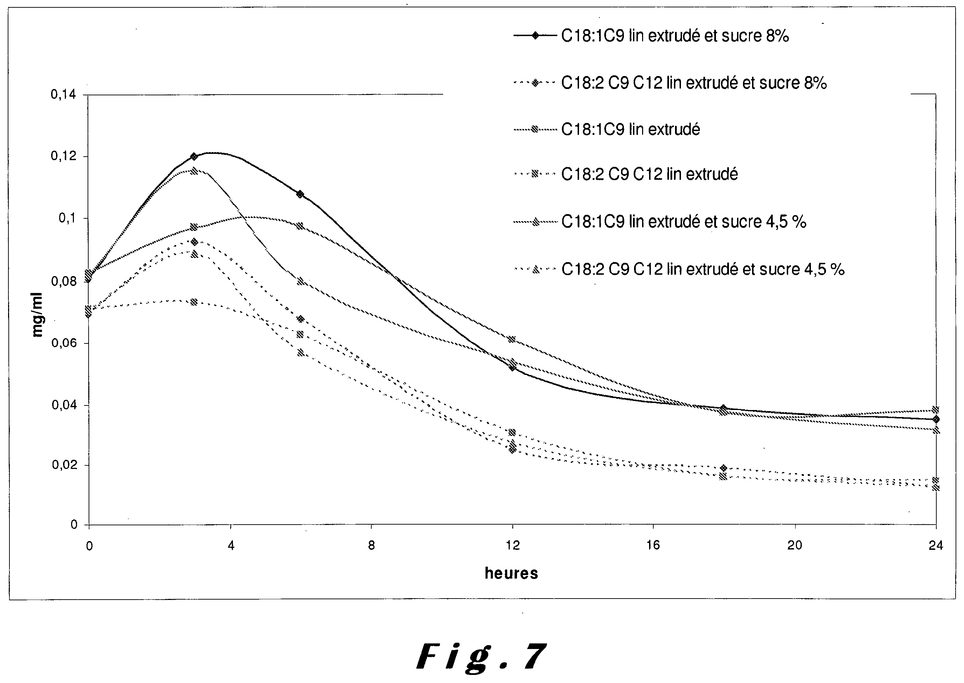

Les résultats sont illustrés aux figures 1 à 7.

La figure 1 illustre la comparaison de la teneur en acide stéarique, oléique, linoléique, α-linolénique entre l'aliment extrudé à base de graines de colza et l'aliment extrudé à base de graines de colza auquel 1% en poids de xylose a été ajouté, avant l'extrusion.

La figure 2 illustre la comparaison de la teneur en acide vaccénique, ruménique, *trans-10* C18:1 entre l'aliment extrudé à base de graines de colza et l'aliment extrudé à base de graines de colza auquel 1% en poids de xylose a été ajouté, avant l'extrusion.

La figure 3 illustre la comparaison de la teneur en acide stéarique, oléique, linoléique, α-linolénique entre l'aliment extrudé à base de graines de lin et l'aliment extrudé à base de graines de lin auquel 1% en poids de xylose a été ajouté, avant l'extrusion.

La figure 4 illustre la comparaison de la teneur en acide vaccénique, ruménique, *trans*-10 C18:1 entre l'aliment extrudé à base de graines de lin et l'aliment extrudé à base de graines de lin auquel 1% en poids de xylose a été ajouté, avant l'extrusion.

La figure 5 illustre la comparaison de la teneur en acide stéarique et en acide alpha-linolénique entre l'aliment extrudé à base de graines de lin et l'aliment extrudé à base de graines de lin auquel 4,5 et 8% en poids de la composition de sucre réducteur selon la tableau 1 ont été ajoutés, avant l'extrusion.

La figure 6 illustre la comparaison de la teneur en acide vaccénique (C18:1 *trans*-10 et *trans-*11) et en acide linoléique entre l'aliment extrudé à base de graines de lin et l'aliment extrudé à base de graines de lin auquel 4,5 et 8% en poids de la composition de sucre réducteur selon la tableau 1 ont été ajoutés, avant l'extrusion.

La figure 7 illustre la comparaison de la teneur en acide oléique et en acide linoléique C18:2 *cis*-9-12 entre l'aliment extrudé à base de graines de lin et l'aliment extrudé à base de graines de lin auquel 4,5 et 8% en poids de la composition de sucre réducteur selon la tableau 1 ont été ajoutés, avant l'extrusion.

Comme on peut le constater, l'ajout de xylose ou de la composition de sucre réducteur illustrée au tableau 1 ne semble pas avoir pour effet de réduire la biohydrogénation des acides gras au niveau du rumen.

Il est bien entendu que la présente invention n'est en aucune façon limitée aux formes de réalisations décrites ci-dessus et que bien des modifications peuvent y être apportées sans sortir du cadre des revendications annexées.

Par exemple, l'invention a été décrite en revendiquant un aliment pour animaux producteurs de lait et dans les exemples, les vaches laitières ont été mentionnées. Il va de soi que les exemples mentionnant les vaches laitières ne doivent pas être considérés comme limitant l'invention et que l'invention s'étend également aux autres animaux producteurs de lait tels que les chèvres et les chamelles, chez lesquelles une biohydrogénation forte a lieu donnant dès lors généralement des taux d'oméga 3 réduits. A titre d'exemple, chez les brebis ou les bufflonnes, la biohydrogénation n'est pas aussi élevée et donc les oméga 3 présents dans leur alimentation sont mieux conservés que chez les espèces concernées par la présente invention.

## Revendications

1. Aliment pour animaux producteurs de lait comprenant des graines de lin extrudées et un taux de matières grasses entre 23 et 30 % en poids par rapport au poids total de l'aliment, **caractérisé en ce qu'**il comprend en outre au moins un sucre réducteur sous la forme d'un disaccharide comprenant au moins une unité fructose.

2. Aliment selon la revendication 1, dans lequel ledit sucre réducteur sous la forme d'un disaccharide comprenant au moins une unité fructose est choisi dans le groupe constitué du turanose, du maltulose, du leucrose, du tréhalulose et de l'isomaltulose et leurs mélanges.

3. Aliment selon la revendication 1 ou la revendication 2, dans lequel ledit sucre réducteur comprend au moins de l'isomaltulose et/ou du tréhalulose et de préférence majoritairement en poids.

4. Aliment selon l'une quelconque des revendications précédentes, dans lequel ledit sucre réducteur est présent en une quantité allant de 1 à 20 % en poids par rapport au poids total de l'aliment est de préférence en une quantité d'environ 2 à 10 %, à 90 % de matière sèche.

5. Aliment selon l'une quelconque des revendications précédentes, dans lequel la quantité de graines de lin extrudées est comprise entre 20 et 99 %, de préférence comprise entre 50 et 70 %, et plus préférentiellement d'environ 60 % en poids par rapport au poids total de la composition.

6. Aliment selon l'une quelconque des revendications précédentes, comprenant en outre d'autres graines oléagineuses choisies parmi les graines de colza, coton, soja, tournesol, karité, sésame, canola et analogue.

7. Aliment selon la revendication 6, dans lequel la proportion d'autres graines oléagineuses est comprise entre 1 et 80 % en poids par rapport au poids total de l'aliment.

8. Aliment selon l'une quelconque des revendications précédentes, comprenant en outre du blé et des graines de légumineuse.

9. Aliment selon la revendication 8, dans lequel la quantité de blé est de 1 à 30 % en poids par rapport au poids total de l'aliment et la quantité de graines de légumineuses est comprise entre 1 et 20 % en poids par rapport au poids total de l'aliment.

10. Procédé de fabrication d'un aliment extrudé pour animaux producteurs de lait comprenant les étapes de:
- dosage, broyage et homogénéisation de graines de lin, avec au moins un sucre réducteur sous la forme d'un disaccharide comprenant au moins une unité fructose et éventuellement un ou plusieurs autre composant choisi parmi une autre graine oléagineuse ou une céréale, avec obtention d'un mélange comprenant au moins des graines de lin extrudées et ledit sucre réducteur,
- extrusion dudit mélange par voie humide à une température comprise entre 80 et 150 °C avec obtention d'un aliment extrudé, et
- séchage de l'aliment extrudé ainsi produit qui contient au plus 9% d'eau.

11. Procédé selon la revendication 10, dans lequel ledit sucre réducteur sous la forme d'un disaccharide comprenant au moins une unité fructose est choisi dans le groupe constitué, du turanose, du maltulose, du leucrose, du tréhalulose et de l'isomaltulose et leurs mélanges.

12. Lait de ruminants, en particulier de vaches, susceptible d'être obtenu à l'aide de l'aliment selon l'une quelconque des revendications 1 à 9, contenant une première famille d'acides gras allant de C4:0 à C17:1 et une deuxième famille de C18 totaux, ladite première famille de C4:0 à C17:1 étant présente en une quantité de 44 à 58 g, de préférence de 44 à 57,5 g pour 100 g d'acides gras totaux et ladite deuxième famille des acides gras C18 totaux étant présente en une quantité allant de 42 g, de préférence de 42,5 g à 55,5 g pour 100 g d'acides gras totaux, **caractérisé en ce que** la valeur du rapport des teneurs oméga 6 / oméga 3 au sein de la famille des C18 est comprise 1,7 et 1,3.

13. Lait selon la revendication 12, dans lequel la deuxième famille des acides gras C18 totaux est constituée de C18 saturés et de C18 insaturés et présentant une teneur en C18 saturés allant de 28 à 35 % en poids par rapport au poids de C18 totaux et une teneur en C18 insaturés allant de 65 à 72 % en poids par rapport au poids de C18 totaux.

14. Lait selon la revendication 12 ou la revendication 13, présentant une teneur en acide gras C18:1 *trans*-10 équivalente à celle obtenue avec un ruminant alimenté de manière conventionnelle.

15. Lait selon l'une quelconque des revendications 12 à 14, contenant de l'acide stéarique provenant majoritairement de l'hydrogénation de l'acide vaccénique (C18:1 *trans*-11).

16. Lait selon l'une quelconque des revendication 12 à 15, présentant une teneur en acide gras C18:1 *trans*-10 comprise entre 0,1 et 0,7 g pour 100 g d'acides gras totaux.

17. Utilisation d'un aliment suivant l'une quelconque des revendications 1 à 9, pour la réalisation d'une ration alimentaire destinée à une vache laitière.

18. Utilisation d'un aliment selon l'une quelconque des revendications 1 à 9, dans laquelle ledit aliment est ajouté à une ration alimentaire quotidienne à base de fourrage hivernal qui est choisi notamment parmi: ensilage de maïs, ensilage d'herbe, foin.

19. Utilisation selon la revendication 18, dans laquelle une dose d'aliment correspondant à de 6 à 12 % de matière sèche totale ingérée est ajoutée à la ration alimentaire quotidienne à base de fourrage hivernal.

20. Utilisation d'un aliment suivant l'une quelconque des revendications 1 à 9, dans laquelle ledit aliment est ajouté à une ration alimentaire quotidienne à base d'herbe pâturée.

21. Utilisation selon la revendication 20, dans laquelle une dose d'aliment correspondant à de 0,5 à 1,5 kg de matière sèche est ajoutée à la ration alimentaire quotidienne à base d'herbe pâturée.

22. Utilisation d'un sucre réducteur sous la forme d'un disaccharide comprenant au moins une unité fructose et leurs mélanges en combinaison avec des graines de lin extrudées dans l'alimentation des ruminants.

## Patentansprüche

1. Futter für Milch produzierende Tiere, welches extrudierten Leinsamen und einen Fettgehalt zwischen 23 und 30 Gew.% im Verhältnis zum Gesamtgewicht des Futters enthält, **dadurch gekennzeichnet, dass** es ferner zumindest einen Reduktionszucker in Form eines Disaccharids umfasst, das zumindest eine Fruktoseeinheit enthält.

2. Futter nach Anspruch 1, wobei der erwähnte Reduktionszucker in Form eines Disaccharids, das zumindest eine Fruktoseeinheit enthält, aus der Gruppe bestehend aus Turanose, Maltulose, Leukrose, Trehalulose und Isomaltulose und ihren Mischungen ausgewählt wird.

3. Futter nach Anspruch 1 oder Anspruch 2, wobei der erwähnte Reduktionszucker zumindest Isomaltulose und/oder Trehalulose enthält, und vorzugsweise überwiegend an Gewicht.

4. Futter nach irgendeinem der vorigen Ansprüche, wobei der erwähnte Reduktionszucker in einer Menge von zwischen 1 und 20 Gew.% im Verhältnis zum Gesamtgewicht des Futters vorliegt und vorzugsweise in einer Menge von ungefähr 2 bis 10 %, bei 90 % Trockenmasse.

5. Futter nach irgendeinem der vorigen Ansprüche, wobei die Menge des extrudierten Leinsamens zwischen 20 und 99 Gew.-% liegt, vorzugsweise zwischen 50 und 70 Gew.-% und noch besser bei rund 60 Gew.-% im Verhältnis zum Gesamtgewicht der Zusammensetzung.

6. Futter nach irgendeinem der vorigen Ansprüche, welches ferner andere Ölsaaten enthält, ausgewählt aus den Samen von Raps, Baumwolle, Soja, Sonnenblume, Sheanuss, Sesam, Canola und Ähnlichem.

7. Futter nach Anspruch 6, wobei der Anteil anderer Ölsaaten zwischen 1 und 80 Gew.-% im Verhältnis zum Gesamtgewicht des Futters liegt.

8. Futter nach irgendeinem der vorigen Ansprüche, welches ferner Weizen und Samen von Hülsenfrüchten enthält.

9. Futter nach Anspruch 8, wobei die Weizenmenge zwischen 1 und 30 Gew.-% im Verhältnis zum Gesamtgewicht des Futters und die Menge an Samen von Hülsenfrüchten zwischen 1 und 20 Gew.-% im Verhältnis zum Gesamtgewicht beträgt.

10. Verfahren zur Herstellung eines extrudierten Futters für Milch produzierende Tier, welches folgende Schritte umfasst:
- Dosieren, Mahlen und Homogenisieren des Leinsamens, mit zumindest einem Reduktionszucker in Form eines Disaccharids, das zumindest eine Fruktoseeinheit enthält, und eventuell einem oder mehreren anderen Bestandteilen ausgewählt aus einer anderen Ölsaat oder einem Getreide,
- mit Erhalt einer Mischung, welche zumindest extrudierten Leinsamen und den erwähnten Reduktionszucker enthält,
- Feuchtextrusion der erwähnten Mischung bei einer Temperatur zwischen 80 und 150 °C mit Erhalt eines extrudierten Futter, und
- Trocknen des so hergestellten extrudierten Futters, das höchstens 9 % Wasser enthält.

11. Verfahren nach Anspruch 10, wobei der erwähnte Reduktionszucker in Form eines Disaccharids, das zumindest eine Fruktoseeinheit enthält, aus der Gruppe bestehend aus Turanose, Maltulose, Leukrose, Trehalulose und Isomaltulose und ihren Mischungen ausgewählt wird.

12. Milch von Wiederkäuern, insbesondere Kühen, erhalten mithilfe des Futters nach irgendeinem der Ansprüche 1 bis 9, die eine erste Familie von Fettsäuren von C4:0 bis C17:1 und eine zweite Familie von C18 gesamt enthält, wobei die erwähnte erste Familie von C4:0 bis C17:1 in einer Menge von 44 bis 58 g, vorzugsweise von 44 bis 57,5 g auf 100 g Fettsäuren gesamt vorliegt und die erwähnte zweite Familie von C18 gesamt in einer Menge von 42 g, vorzugsweise von 42,5 bis 55,5 g auf 100 g Fettsäuren gesamt vorliegt, **dadurch gekennzeichnet, dass** der Verhältniswert der Gehalte an Omega-6/Omega-3 in der Familie der C18 zwischen 1,7 und 1,3 liegt.

13. Milch nach Anspruch 12, wobei die zweite Familie der Fettsäuren C18 gesamt aus gesättigten C18 und ungesättigten C18 besteht, und einen Gehalt an gesättigten C18 von 28 bis 35 Gew.-% im Verhältnis zum Gewicht der C18 gesamt, und einen Gehalt an ungesättigten C18 von 65 bis 72 Gew.-% im Verhältnis zum Gewicht der C18 gesamt aufweist.

14. Milch nach Anspruch 12 oder Anspruch 13, welche einen Anteil an Fettsäure C18:1 *trans-10* aufweist, der jenem entspricht, der mit einem herkömmlich gefütterten Wiederkäuer erhalten wird.

15. Milch nach irgendeinem der Ansprüche 12 bis 14, die Stearinsäure enthält, welche vorwiegend aus der Hydrierung der Vaccensäure (C18:1 *trans*-11) stammt.

16. Milch nach irgendeinem der Ansprüche 12 bis 15, die einen Gehalt an Fettsäure C18:1 trans-10 von zwischen 0,1 und 0,7 g auf 100 g Fettsäuren gesamt aufweist.

17. Verwendung eines Futters nach irgendeinem der Ansprüche 1 bis 9, für die Zusammenstellung einer Futterration für eine Milchkuh.

18. Verwendung eines Futters nach irgendeinem der Ansprüche 1 bis 9, wobei das erwähnte Futter einer täglichen Futterration auf Grundlage von Winterfutter zugesetzt wird, welches insbesondere aus Maissilage, Grassilage, Heu ausgewählt wird.

19. Verwendung nach Anspruch 18, wobei eine Futterdosis, die 6 bis 12 % an insgesamt aufgenommener Trockenmasse entspricht, der täglichen Futterration auf Grundlage von Winterfutter zugesetzt wird.

20. Verwendung eines Futters nach irgendeinem der Ansprüche 1 bis 9, wobei das erwähnte Futter einer täglichen Futterration auf Grundlage von geweidetem Gras zugesetzt wird.

21. Verwendung nach Anspruch 20, wobei eine Futterdosis, die 0,5 bis 1,5 kg an Trockenmasse entspricht, der täglichen Futterration auf Grundlage von geweidetem Gras zugesetzt wird.

22. Verwendung eines Reduktionszuckers in Form eines Disaccharids, das zumindest eine Fruktoseeinheit enthält, und ihrer Mischungen und Kombinationen mit extrudiertem Leinsamen in der Ernährung der Wiederkäuer.

## Claims

1. A feed for milk-producing animals comprising extruded flax seeds and a fat level between 23 and 30% by weight based on the total weight of the feed, **characterized in that** it further comprises at least one reducing sugar in the form of a disaccharide comprising at least one fructose unit.

2. The feed according to claim 1, wherein said reducing sugar in the form of a disaccharide comprising at least one fructose unit is selected from the group consisting of turanose, maltulose, leucrose, trehalulose and isomaltulose.and their mixtures.

3. The feed according to claim 1 or claim 2, wherein said reducing sugar comprises at least isomaltulose and/or trehalulose and preferably as a majority by weight.

4. The feed according to any of the preceding claims, wherein said reducing sugar is present in an amount ranging from 1 to 20% by weight based on the total weight of the feed, is preferably in an amount from about 2 to 10%, to 90% of dry material.

5. The feed according to any of the preceding claims, wherein the amount of extruded flax seeds is comprised between 20 and 99%, preferably comprised between 50 and 70%, and more preferentially of about 60% by weight based on the total weight of the composition.

6. The feed according to any of the preceding claims, further comprising oleaginous seeds selected from rape seeds, cotton seeds, soya bean seeds, sunflower seeds, shea seeds, sesame seeds, canola seeds and the like.

7. The feed according to claim 6, wherein the proportion of other oleaginous seeds is comprised between 1 and 80% by weight based on the total weight of the feed.

8. The feed according to any of the preceding claims, further comprising wheat and legume seeds.

9. The feed according to claim 8, wherein the amount of wheat is from 1 to 30% by weight based on the total weight of the feed and the amount of legume seeds is comprised between 1 and 20% by weight based on the total weight of the feed.

10. A method for making an extruded feed for milk-producing animals comprising the steps of :
- metering, milling and homogenizing flax seeds, with at least one reducing sugar in the form of a disaccharide comprising at least one fructose unit and optionally one or more other components selected from another oleaginous seed or a cereal, a mixture being obtained comprising at least extruded flax seeds and said reducing sugar,
- wet-extruding said mixture at a temperature comprised between 80 and 150°C, an extruded feed being obtained, and
- drying the thereby produced extruded feed which contains at most 9% of water.

11. The method according to claim 10, wherein said reducing sugar in the form of a disaccharide comprising at least one fructose unit is selected from the group consisting of turanose, maltulose, leucrose, trehalulose and isomaltulose and their mixtures.

12. Milk from ruminants, in particular cows, which may be obtained with the feed according to any of claims 1 to 9, containing a first family of fatty acids ranging from C4:0 to C17:1 and a second family of total C18 fatty acids, said first family of C4:0 to C17:1 being present in an amount from 44 to 58 g, preferably from 44 to 57.5 g for 100 g of total fatty acids and said second family of total C18 fatty acids being present in an amount ranging from 42 g, preferably from 42.5 g to 55.5 g for 100 g of total fatty acids, **characterized in that** the value of the ratio of the Omega 6/Omega 3 contents within the C18 family is comprised between 1.7 and 1.3.

13. The milk according to claim 12, wherein the said second family of total C18 fatty acids consists of saturated C18 fatty acids and of unsaturated C18 fatty acids and having a content of saturated C18 fatty acids ranging from 28 to 35% by weight based on the weight of total C18 fatty acids and a content of unsaturated C18 fatty acids ranging from 65 to 72% by weight based on the weight of total C18 fatty acids.

14. The milk according to claim 12 or claim 13, having a content of C18:1 *trans*-10 fatty acid equivalent to the one obtained with a ruminant fed in a conventional way.

15. The milk according to any of claims 12 to 14, containing stearic acid in majority stemming from hydrogenation of vaccenic acid (C18:1 *trans-*11).

16. The milk according to any of claims 12 to 15, having a content of C18:1 *trans-10* fatty acid comprised between 0.1 and 0.7 g for 100 g of total fatty acids.

17. The use of a feed according to any of claims 1 to 9, for producing a food ration intended for a dairy cow.

18. The use of a feed according to any of claims 1 to 9, wherein said feed is added to a daily food ration based on winter forage which is notably selected from: maize silage, grass silage, hay.

19. The use according to claim 18, wherein a dose of feed corresponding to 6 to 12% of total ingested dry material is added to the daily food ration based on winter forage.

20. The use of a feed according to any of claims 1 to 9, wherein said feed is added to a daily food ration based on grazed grass.

21. The use according to claim 20, wherein a dose of feed corresponding to 0.5 to 1.5 kilo of dry material is added to the daily food ration based on grazed grass.

22. The use of a reducing sugar in the form of a disaccharide comprising at least one fructose unit and their mixtures in combination with extruded flax seeds in the feeding of ruminants.
